# EUROPEAN PATENT APPLICATION

(11) **EP 3 926 066 A1**
(43) Date of publication of application: **22.12.2021**
(21) Application number: 20802988.4
(22) Date of filing: 29.04.2020
(51) Int. Cl.: C23C 2/00, C02F 1/24, C02F 1/40, C23C 2/06, C23C 2/40

(54) **DEVICE FOR REMOVING FOREIGN MATERIAL FROM MOLTEN METAL SURFACE IN STEEL SHEET HOT-DIP GALVANIZING PROCESS**

(30) Priority: 03.05.2019 KR 20190052488
(71) Applicant: Step Engineering Co. Ltd., Jeollanam-do 57712 (KR)
(72) Inventor: MOON, Byeong Won, Gwangyang-si Jeollanam-do 57718 (KR)
(74) Representative: Stolmár & Partner Patentanwälte PartG mbB
(86) International application number: PCT/KR2020/005773
(87) International publication number: WO 2020/226364

(57) **Abstract**

A device for removing foreign material from a molten metal surface in a steel sheet hot-dip galvanizing process, of the present invention, comprises: a snorkel part of which the end portion is submerged under the molten metal surface of a hot-dip galvanizing bath so as to encompass a steel sheet inserted into the hot-dip galvanizing bath, in order to prevent the oxidization thereof; a snout including a dam unit having a dam forming part which encompasses the steel sheet from the end portion of the snorkel part so as to be spaced a predetermined gap from same, and which allows a molten galvanizing solution inside the hot-dip galvanizing bath to flow over toward the inner peripheral surface of the snorkel part so as to prevent the foreign material that falls onto the molten metal surface inside the snorkel part from attaching to the steel sheet; and a molten zinc discharge unit which is provided inside the snorkel part so as to pump, toward the molten metal surface inside the hot-dip galvanizing bath, the molten galvanizing solution having flowed over the dam forming part of the damp unit, thereby preventing the foreign material included in the molten galvanizing solution, having flowed over the dam forming part, from mixing into the molten galvanizing solution inside the hot-dip galvanizing bath and repolluting the molten galvanizing solution or flowing into the snorkel part again.

## Description

### [Technical Field]

The present invention relates to a device for removing foreign substances from a molten metal surface, and more particularly, to a device for removing foreign substances from a molten metal surface in a steel sheet hot-dip galvanizing process, which is capable of preventing foreign substances in a snorkel part from adhering to the surface of a galvanized steel sheet, thereby improving the galvanizing quality of a steel sheet.

### [Background Art]

Hot-dip galvanized steel sheets have been widely used for general construction materials as well as exterior plates for vehicles that require strict quality control on the basis of excellent corrosion resistance thereof. In particular, in the case of exterior plates for vehicles, which have been increasingly used in recent years, since surface properties are considered as important as corrosion resistance, strict surface quality control is required.

Meanwhile, while continuously passing through a payoff reel (not illustrated) and a welding machine (not illustrated), a plated steel sheet of a cold-rolled coil is heat-treated in a heating furnace (annealing furnace) to remove residual stress, and the heated plated steel sheet flows into a plating bath filled with a plating solution, that is, hot-dip zinc, while being maintained at a temperature suitable for galvanizing.

The temperature of a hot-dip galvanizing bath is maintained at approximately 460 °C. In this case, since the melting point of zinc is 420 °C, zinc is always in a molten state in the hot-dip galvanizing bath, and thus zinc fume is continuously evaporated to the top.

For hot-dip galvanizing, the steel sheet is continuously supplied into the hot-dip galvanizing bath through the inside of a snout and is galvanized by being wound on and unwound from a sink roll, and the plating amount is then controlled by an air knife. For alloying a plated layer, the steel sheet enters an alloying furnace at a location away from the air knife and then is subjected to alloying heat treatment. Further, the steel sheet is continuously cooled in an air cooling table and goes through a process of advancing toward a top roll.

In this process, the amount of evaporated zinc measured inside the snout is in a range of about 1 to 2 liters per hour, and it is known that a considerably large amount of zinc is evaporated. Ash (hereinafter, referred to as "foreign substances"), which is such a zinc vapor, is attached to the inner surface of the snout by spreading to an upper portion of the snout and falls toward a molten metal surface inside the snout due to its own weight.

The ash, that is, the foreign substances, falling to the molten metal surface, is attached to the surface of the plated steel sheet while floating or forms intermittent or continuous bands in a steel sheet moving direction. Thus, there is a problem in that the galvanizing quality of the steel sheet is degraded.

Korean Patent Application Publication No. 2013-0044972 discloses a snout device for a steel sheet plating line. The disclosed snout device includes: a snout body that is connected between a heating furnace and a plating bath filled with a plating solution, a plated steel sheet passing through the inside thereof; and a dam device that is rotatably installed at an end of the snout body, has an outer surface disposed outside the snout body, and is formed to be higher than the surface of the plating solution in neutral state.

Further, Korean Patent Registration No. 1070080 discloses a snout device for a steel sheet plating line, Korean Patent Registration No. 1806078 discloses a metal pump for a snout, and Korean Patent Registration No. 1842168 discloses a dross removal device for a galvanizing line.

As described above, the device for removing foreign substances from a molten metal surface according to the related art has a structure that prevents foreign substances, such as ash, from adhering to the surface of a plated zinc steel sheet while passing through the inside of the plating bath but cannot discharge the foreign substances from the molten metal surface in the snout.

In consideration of this point, the inventor of the present application applied for a device for removing foreign substances from a molten metal surface inside a snout, which was registered as Korean Patent Registration No. 0831061.

Further, Korean Patent Registration No. 101353197 discloses a snout device for a steel sheet plating line. The disclosed snout device includes a snout body which is connected between a heating furnace and a plating path filled with a plating solution and through which a plated steel sheet passes thereinside, a first dam device and a second dam device which are installed independently from the snout body on two sides of the plated steel sheet at an end of the snout body on the plating bath side, and a metal pump which is movably installed at a position adjacent to the first dam device and the second dam device outside the snout body.

Since the metal pump has a structure for pumping the plating solution inside the snout body into the plating bath, foreign substances and the plating solution are introduced back into the snout body.

### [Disclosure]

### [Technical Problem]

The present invention is directed to providing a device for removing foreign substances from a molten metal surface in a steel sheet hot-dip galvanizing process which may prevent foreign substances, such as ash, floating on the molten metal surface in a snout from being moved to a steel sheet in the snout in a steel sheet hot-dip galvanizing process.

The present invention is also directed to providing a device for removing foreign substances from a molten metal surface in a steel sheet hot-dip galvanizing process which may prevent foreign substances from adhering to the surface of the plated layer of the steel sheet while the foreign substances circulate inside the hot-dip galvanizing solution in a process of galvanizing the surface of the steel sheet.

### [Technical Solution]

One aspect of the present invention provides a device for removing foreign substances from a molten metal surface in a steel sheet hot-dip galvanizing process, the device including: a snout that includes a snorkel part, which has an end immersed in a molten metal surface of a hot-dip galvanizing bath to prevent oxidation by surrounding a steel sheet flowing into the hot-dip galvanizing bath, and a dam unit having a dam formation part that surrounds the steel sheet to be spaced apart from the end of the snorkel part by a predetermined interval and allows a hot-dip galvanizing solution in the hot-dip galvanizing bath to overflow to an inner peripheral surface of the snorkel part so as to prevent foreign substances falling onto the molten metal surface in the snorkel part from adhering to the steel sheet; and a molten zinc discharge unit that is installed in the snorkel part and pumps the hot-dip galvanizing solution that overflows the dam formation part of the dam unit toward the molten metal surface in the hot-dip galvanizing bath outside the snorkel part so as to prevent foreign substances contained in the hot-dip galvanizing solution that overflows the dam formation part from being mixed into the hot-dip galvanizing solution in the hot-dip galvanizing bath to re-contaminate the hot-dip galvanizing solution or from flowing back into the snorkel part.

The molten zinc discharge unit may include at least one discharge connection part installed in the snorkel part and connected to a storage space in which the hot-dip galvanizing solution that overflows the dam formation part of the dam unit is stored; a housing member connected to the discharge connection part and having an open upper part and a sealed lower surface; and a pumping unit that includes a support bracket installed on an upper side of the housing member, a driving unit installed in the support bracket, a rotary shaft connected to a driving shaft of the driving unit and extending into the housing, and an impeller that is installed in the rotary shaft and discharges the hot-dip galvanizing solution flowing into the housing through the discharge tube part toward the molten metal surface of the hot-dip galvanizing bath through the open part of the housing member.

A molten zinc discharge hole for discharging molten zinc remaining inside the housing, the discharge tube part, and the snorkel part when the molten zinc discharge unit is repaired may be formed in a lower surface of the housing.

The driving unit, the rotary shaft rotated by the driving unit, and the impeller may be installed to be vertically movable by an elevation unit installed in the support bracket.

The molten zinc discharge unit may include at least one discharge connection part that is installed in the snorkel part and discharges the hot-dip galvanizing solution that overflows the dam member from an inside of the snorkel part, a housing member that is connected to the discharge connection part and has a sealed lower surface, and a pumping unit that includes a support bracket installed on the upper side of the housing member, a driving unit installed in the support bracket, a rotary shaft connected to a driving shaft of the driving unit and extending into the housing member, and an impeller that is installed in the rotary shaft and pumps the hot-dip galvanizing solution flowing into the housing member through the discharge connection part, wherein the molten zinc discharge unit further includes a molten zinc discharge part connected to the housing member to discharge the hot-dip galvanizing solution in the snorkel part toward a molten metal surface of the hot-dip galvanizing bath.

Another aspect of the present invention provides a device for removing foreign substances from a molten metal surface in a steel sheet hot-dip galvanizing process, the device including a snorkel part that has an end immersed in a molten metal surface of a hot-dip galvanizing bath to prevent oxidation by surrounding a steel sheet flowing into the hot-dip galvanizing bath, a tank part that is installed to be vertically movable in the snorkel part and has a plating solution inflow damper part spaced apart from a steel sheet surrounded by the snorkel part by a predetermined interval and allowing the hot-dip galvanizing solution near the steel sheet to flow thereinto, a molten zinc discharge unit that is installed in the tank part, pumps molten zinc flowing into the tank part toward the molten metal surface in the hot-dip galvanizing bath, and discharges the hot-dip galvanizing solution containing foreign substances in the tank part toward the molten metal surface in the hot-dip galvanizing bath so as to prevent foreign substances from flowing into the snorkel part, and an elevation unit that is installed in the snorkel part and elevates the molten zinc discharge unit and the tank part.

### [Advantageous Effects]

In a device for removing foreign substances from a molten metal surface in a steel sheet hot-dip galvanizing process according to the present invention, a hot-dip galvanizing solution and foreign substances flowing into a snorkel part are discharged upward from the molten metal surface outside the snorkel part, the foreign substances float on the molten metal surface in a hot-dip galvanizing bath, and thus the inside of the hot-dip galvanizing solution of the hot-dip galvanizing bath can be prevented from being recontaminated.

Further, in a device for removing foreign substances from a molten metal surface in a steel sheet hot-dip galvanizing process according to the present invention, the foreign substances discharged to the hot-dip galvanizing bath are prevented from flowing back into the snout, and thus the galvanizing quality of the steel sheet can be improved. A structure is applied which pushes and discharges the hot-dip galvanizing solution having a large specific gravity in an upward direction, and thus a load of a driving motor can be reduced.

Further, in a device for removing foreign substances from a molten metal surface in a steel sheet hot-dip galvanizing process according to the present invention, an inert gas is sprayed onto a portion in which a rotary shaft for pumping the hot-dip galvanizing solution and foreign substances inside a storage space and the hot-dip galvanizing solution in the hot-dip galvanizing bath are in contact with each other. Thus, the rotary shaft can be prevented from being oxidized due to being in contact with air at a boundary at which the rotary shaft and the hot-dip galvanizing solution are in contact with each other. Further, foreign substances such as ash and dross can be prevented from adhering to the rotary shaft that rotates an impeller, and the inert gas is sprayed toward to the rotary shaft, and thus the rotary shaft can be cooled.

### [Description of Drawings]

FIG. 1 is a side cross-sectional view illustrating a device for removing foreign substances from a molten metal surface in a steel sheet hot-dip galvanizing process according to a first embodiment of the present invention.
FIG. 2 is a cross-sectional view of the device for removing foreign substances from a molten metal surface in a steel sheet hot-dip galvanizing process illustrated in FIG. 1.
FIGS. 3 to 8 are partially cut-away cross-sectional views illustrating molten zinc extraction units according to other embodiments.
FIG. 9 is a perspective view illustrating a molten zinc extraction unit according to another embodiment of the present invention.
FIG. 10 is a perspective view of the device for removing foreign substances from a molten metal surface in a steel sheet hot-dip galvanizing process according to the present invention.
FIG. 11 is a cross-sectional view of the device for removing foreign substances from a molten metal surface in a steel sheet hot-dip galvanizing process illustrated in FIG. 10.
FIG. 12 is a perspective view illustrating a discharge unit according to another embodiment.

### [Modes of the Invention]

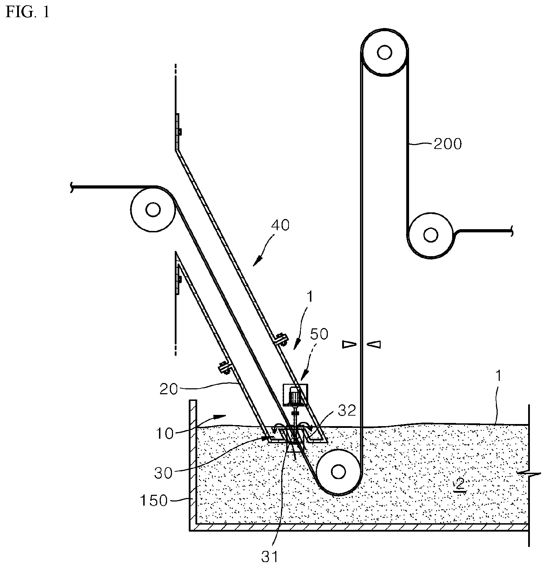

FIGS. 1 to 5 illustrate a device for removing foreign substances from a molten metal surface in a steel sheet hot-dip galvanizing process according to the present invention.

Referring to the drawings, a device 10 for removing foreign substances from a molten metal surface in a steel sheet hot-dip galvanizing process according to the present invention is installed in a hot-dip galvanizing bath 150 to prevent oxidation of the surface of a steel sheet 200 that is heat-treated at a high temperature as the steel sheet 200 is exposed to the atmosphere. Further, the device 10 has a structure for preventing the occurrence of surface defects due to ash that is formed by condensing the vapor of a hot-dip galvanizing solution and attached to the surface of the steel sheet 200 as the foreign substances.

The device 10 for removing foreign substances from a molten metal surface in a steel sheet hot-dip galvanizing process has a snout 40 that has an end immersed in a molten metal surface 1 of the hot-dip galvanizing bath 150 to prevent oxidation by surrounding the steel sheet 200 flowing into the hot-dip galvanizing bath 150. As a component of the snout 40, a snorkel part 20 having a lower end immersed in the hot-dip galvanizing bath 150 is provided on a lower side of the snout. The snorkel part 20 includes a dam unit 30 that extends upward from an inner lower end thereof to be adjacent to the outer peripheral surface of the steel sheet 200 passing through the snorkel part 20 and prevents foreign substances falling onto the molten metal surface in the snorkel part 20 from adhering to the steel sheet.

Further, a molten zinc discharge unit 50 is provided which is installed in the snorkel part 20, pumps the hot-dip galvanizing solution that overflows a dam formation part 32 of the dam unit 30 toward the molten metal surface 1 in a hot-dip galvanizing bath 100, allows the foreign substances included therein to be introduced into the hot-dip galvanizing solution 2 in the hot-dip galvanizing bath 150, and thus prevents the hot-dip galvanizing solution from being re-contaminated or from flowing back into the snorkel part 20.

Respective components of the above-described device 10 for removing foreign substances from a molten metal surface in a steel sheet hot-dip galvanizing process according to the present invention will be described in more detail.

The snorkel part 20 constituting the snout 40 is installed on the hot-dip galvanizing bath 150 side between a heat treatment furnace (not illustrated) and the hot-dip galvanizing bath 150 and has a structure for surrounding the steel sheet 200 that is guided by rollers and flows into the hot-dip galvanizing bath 150 to prevent the steel sheet 200 heated for heat treatment from being oxidized by contact with air.

The snout 40 is formed by coupling unit members having an angular shape of an quadrangular tube and the snorkel part 20. Further, the snout 40 may further include a separate actuator (not illustrated) that rotates a part of the snorkel part 20 at an end thereof to be immersed in or lifted from the hot-dip galvanizing bath 20.

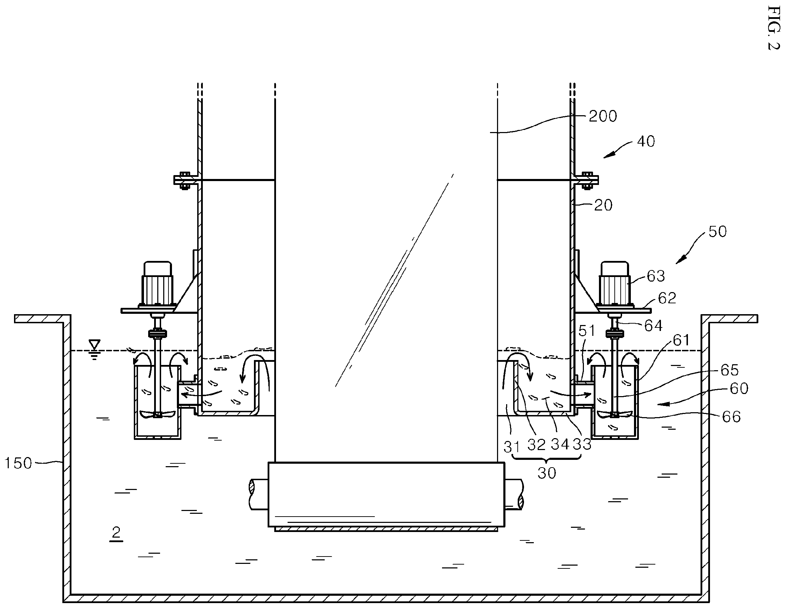

The dam unit 30 may be formed integrally with the snorkel part 20 or may be separately manufactured and combined. As illustrated in FIGS. 1 and 2, the dam unit 30 includes a dam formation part 32 forming a steel sheet inlet 31 through which the steel sheet introduced into the hot-dip galvanizing bath 150 through the inside of the snorkel part 20, that is, an inner space of the snorkel part 20, passes, and a chamber formation part 33 that connects a lower end of the dam formation part 32 and a lower end of the snorkel part 20 to form a storage space 34 for molten zinc that overflows through the steel sheet inlet 31.

An upper end of the dam formation part 32 of the dam unit 30 is located at the same level as the molten metal surface 1 or at a relatively lower level than the molten metal surface 1 in the snorkel part 20 in a state in which the snorkel part 20 is immersed in the hot-dip galvanizing bath 150. Thus, the hot-dip galvanizing solution 2 in the hot-dip galvanizing bath 150 is introduced through the steel sheet inlet 31 through which the steel sheet 200 passes, overflows from the dam formation part 32, and is stored in the storage space 34 formed by the chamber formation part 33.

The dam unit 30 is not limited to the above-described embodiments and may have a structure that allows floating substances or foreign substances including the ash in the snorkel part 20 to flow in a direction away from the surface of the steel sheet 200, on which molten zinc passing through the steel sheet inlet 31 is plated, to prevent the floating substances or the foreign substances from adhering to the surface of the steel sheet 200 passing through the steel sheet inlet 31.

Further, the molten zinc discharge unit 50 discharges, toward the molten metal surface of the hot-dip galvanizing bath 150 outside the snorkel part 20, the hot-dip galvanizing solution that overflows from the dam formation part 32 of the dam unit 30 and then stored in the storage space 34 and thus may continuously introduce the hot-dip galvanizing solution in the hot-dip galvanizing bath 150 through the steel sheet inlet 31.

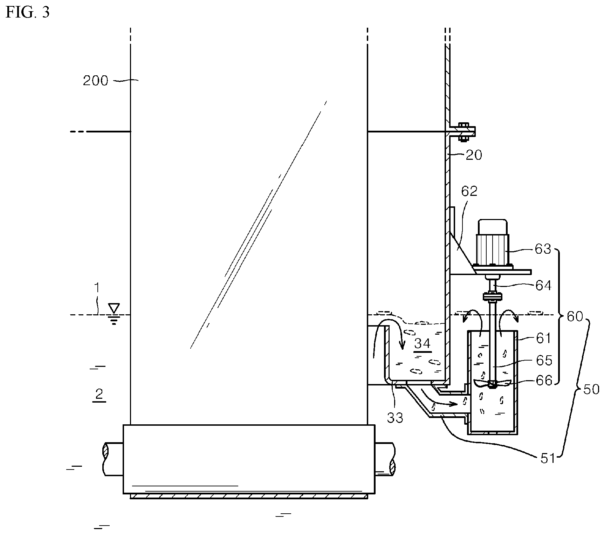

The molten zinc discharge unit 50 has at least one discharge connection part 51 that is installed in the snorkel part 20 to discharge the molten zinc overflowed from the dam formation part 32 of the dam unit 30 and stored in the storage space 34. The discharge connection part 51 may be installed on the side surface of the snorkel part 20 to communicate with the storage space 34, but the present invention is not limited thereto, and the discharge connection part 51 may be connected to the lower surface of the chamber formation part 33 to communicate with the storage space 34 as illustrated in FIG. 3.

Further, an outlet side of the discharge connection part 51 is connected to a pumping unit 60 to discharge the hot-dip galvanizing solution in the storage space toward the molten metal surface of the hot-dip galvanizing bath 100 outside the snorkel part. This is for preventing foreign substances contained in the discharged molten zinc from being mixed with the molten zinc in the hot-dip galvanizing bath 150 such as to re-contaminate the hot-dip galvanizing solution or so as not to flow back into the storage space 34 through the steel sheet inlet 31.

The pumping unit 60 includes a housing member 61 which is connected to the discharge connection part 51 installed in the snorkel part 20 and has an open upper side and a sealed lower side and a driving unit 63 that is installed in a support bracket 62 fixed to the snorkel part 20 above the housing member 61. Further, a driving shaft 64 of the driving unit 63 is connected to a rotary shaft 65 extending inward from the housing member 61, and the rotary shaft 65 includes an impeller 66 through which the hot-dip galvanizing solution introduced into the housing member 61 through the discharge connection part 51 is discharged toward the molten metal surface 1 of the hot-dip galvanizing bath 150 through the open upper side of the housing member 61.

The housing member 61 may have a cylindrical shape having an open upper side and a sealed lower side, and the diameter of the housing member 61 is formed to be relatively greater than the diameter of the impeller 66.

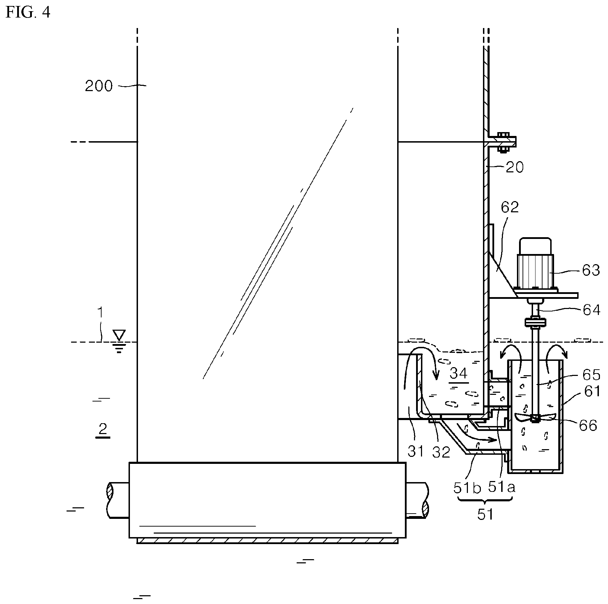

As illustrated in FIG. 4, the discharge connection part 51 connecting an inner space of the housing member 61 and the storage space 34 may include a first discharge tube part 51a connecting the snorkel part 20 and the housing member 61 and a second discharge tube part 51b connecting the chamber formation part 33 provided on the lower surface of the snorkel part 20 and the housing member 61.

In the above embodiment, an upper end side of the housing member 61 may have the same height as the molten metal surface of the hot-dip galvanizing bath 150 or may be located inside the hot-dip galvanizing solution to be relatively close to the molten metal surface, and thus severe turbulence of the pumped hot-dip galvanizing solution 2 is prevented from occurring on the molten metal surface of the hot-dip galvanizing bath 150. However, the upper end of the housing member 61 may be slightly higher than the molten metal surface. To this end, a space between the open upper end of the housing member 61 and the driving unit 63 installed inside the housing member 61 to rotate the impeller 66 should be kept open so that pumped hot-dip galvanizing solution may be discharged.

A plating solution guide part (not illustrated) for guiding the pumped hot-dip galvanizing solution 2 discharged through the open side of the housing member 61 so that the hot-dip galvanizing solution 2 flows in a predetermined direction may be formed on the open upper end side of the housing member 61. The plating solution guide part may have a retractable portion retracted from the upper end side of the housing member 61, and a guide blade may be formed at an edge of the retractable portion. However, the present invention is not limited thereto, and the plating solution guide part may include at least one of a guide blade or guide tube capable of discharging the hot-dip galvanizing solution, discharged from the upper end side, to the molten metal surface in a set direction and retractable grooves formed and retracted in the upper end side of the housing member 61.

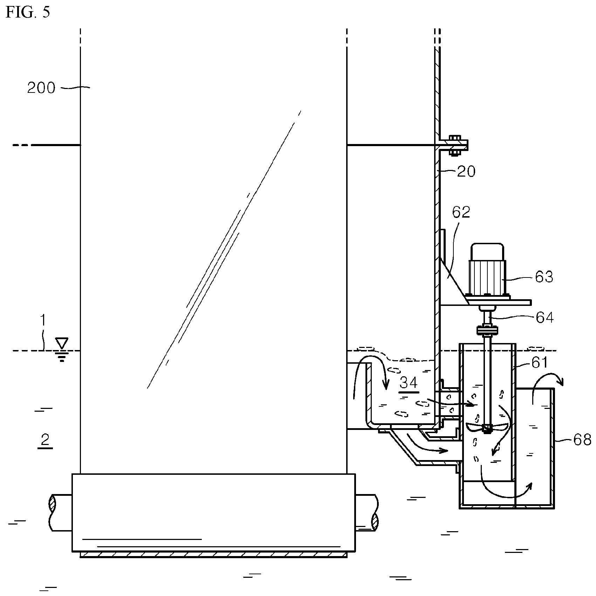

Meanwhile, as illustrated in FIG. 5, the housing member 61 further includes a molten zinc discharge tube 68 for discharging the hot-dip galvanizing solution, pumped by the impeller 66, toward the molten metal surface of the hot-dip galvanizing bath 150. In this case, as described above, the upper surface side of the housing member 61 is not necessarily open. When the upper surface of the housing member 61 provided with the molten zinc discharge tube 68 for discharging the hot-dip galvanizing solution is open, the open upper end side of the housing member 61 may protrude upward from the molten metal surface of the hot-dip galvanizing bath 150.

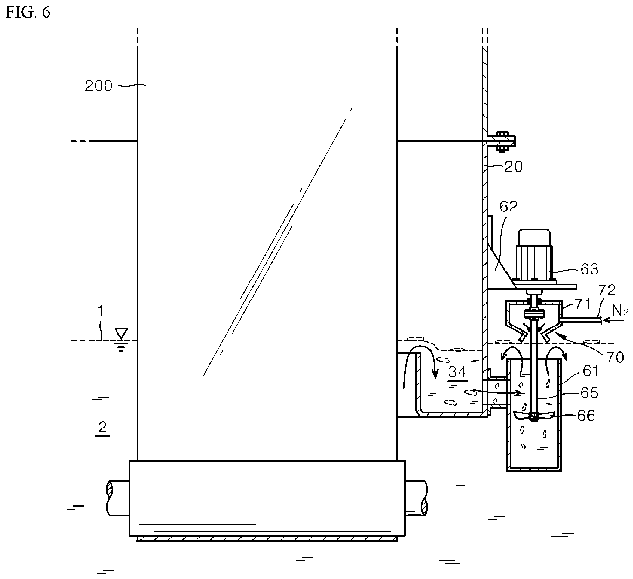

Further, as described above, when the pumping unit 60 discharges the hopdip galvanizing solution, that overflows from the dam formation part 32 and is stored in the storage space 34, toward the molten metal surface 1 and thus foreign substances are prevented from being contained in the molten zinc that is a plating solution, as illustrated in FIG. 6, an inert gas spray unit 70 may be further provided to prevent oxidation of the molten zinc which is exposed to the molten metal surface and flows.

The inert gas spray unit 70 is provided with a spray nozzle 71 which is installed in the support bracket 62 or the driving unit 63 side and injects inert gas toward the housing member 61 or the molten zinc discharge tube 68, and an inert gas tank (not illustrated) connected to the spray nozzle 71 by a connection tube 72. Nitrogen gas may be used as the inert gas.

The spray nozzle 71 may surround the rotary shaft 65 at a position higher than the molten metal surface of the hot-dip galvanizing bath so that the inert gas sprayed through the spray nozzle 71 is directed toward the molten zinc discharged through the housing member 61 or the molten zinc discharge tube 68. To this end, a lower portion of the spray nozzle 71 has a structure in which an inner diameter is gradually reduced toward the rotary shaft 65. The inert gas supply unit 70 blocks the discharged hot-dip galvanizing solution and the rotary shaft from being oxidized by contact with air by spraying nitrogen onto the molten metal surface on which the molten galvanizing solution and the rotary shaft are in contact with each other. By spraying the inert gas toward the rotary shaft, the rotary shaft may be cooled, and foreign substances such as ash and dross may be prevented from being attached to the surface of the rotary shaft.

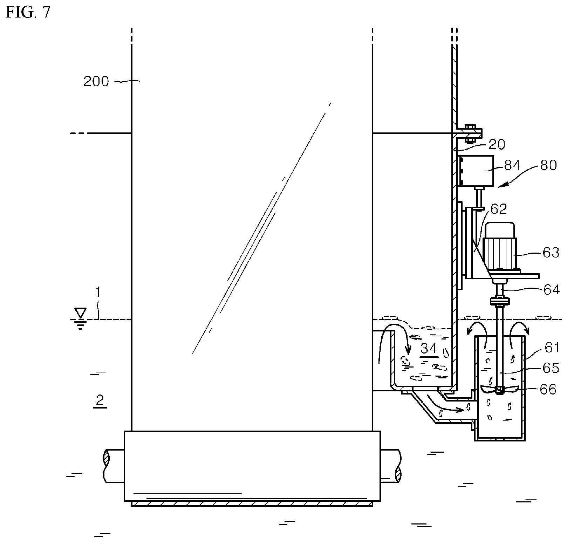

Meanwhile, as illustrated in FIG. 7, the pumping unit 60 may further include an elevation unit 80 that adjusts the height of the impeller 66 inserted into the housing member 61 by elevating the driving unit 63 with respect to the support bracket 62.

The elevation unit 80 includes an elevation member 82 which is elevated along a guide member 81 vertically installed in the support bracket 62 and by which the driving unit 63 is supported, and an actuator 84 which is installed in the support bracket 62 or the snorkel part 20 and elevates the elevation member 82. The actuator 84 may be formed as a cylinder, but the present invention is not limited thereto, and the actuator 84 may be formed as a jack screw driven by a motor.

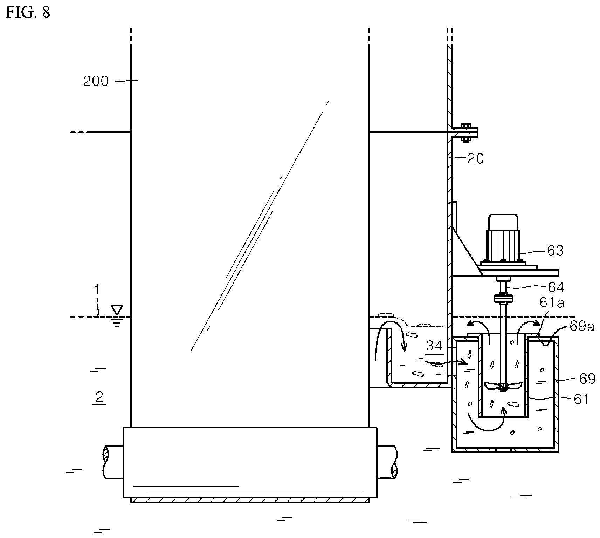

Meanwhile, as illustrated in FIG. 8, the housing member 61 may be installed in a separate chamber 69 which is installed in the snorkel part 20 and communicates with the storage space 34 and in which the hot-dip galvanizing solution in the storage space 34 is discharged and stored. In this case, the housing member 61 may be formed in a cylindrical shape. Further, a flange part 61a is formed on the upper end side of the housing member 61 so that a lower end side of the housing member 61 is supported by the chamber 69 while being inserted through a support part 69a formed in the chamber 69.

A hot-dip galvanizing solution discharge hole 69b may be formed on the lower surface of the chamber 69 so that the hot-dip galvanizing solution in the chamber 69 may be discharged when the device is repaired. When the device is repaired, the hot-dip galvanizing solution discharge hole 69b can prevent the hot-dip galvanizing solution from solidifying in the housing member 61 or the storage space 34.

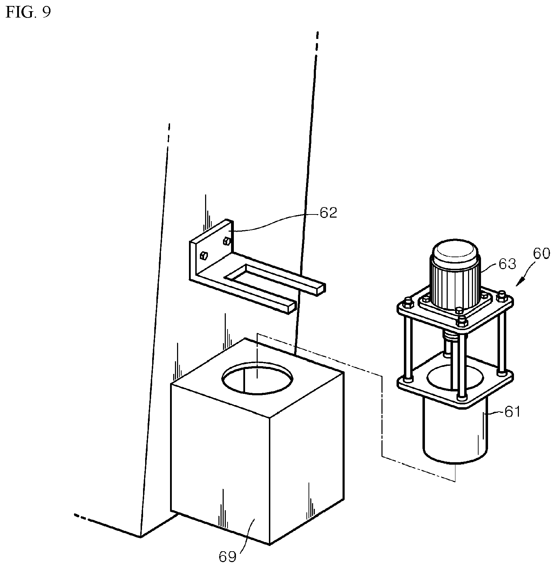

Further, as illustrated in FIG. 9, when the chamber 69 and the support bracket 62 are installed in the snorkel part 20, the housing member 61 and the driving unit may have a structure for coupling and separating the pumping unit 60.

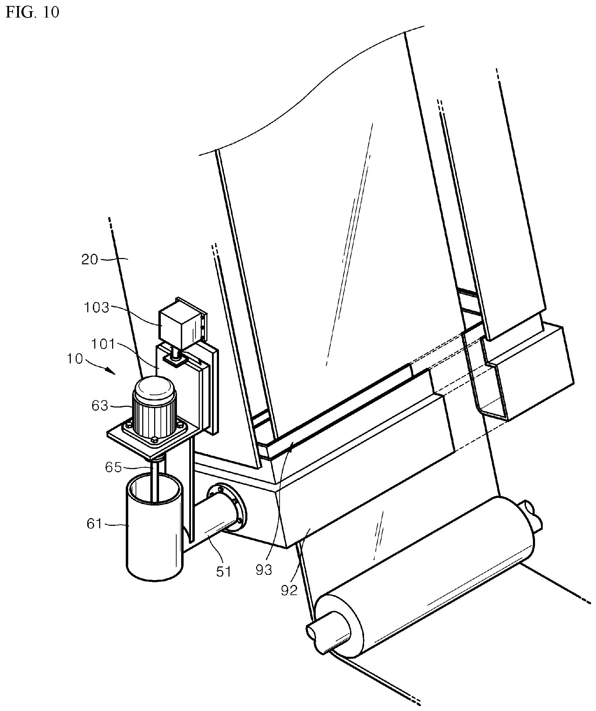

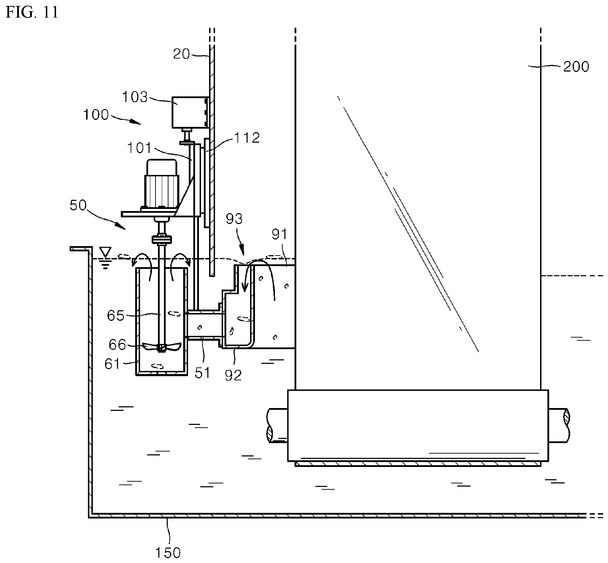

FIGS. 10 and 11 illustrate a device for removing foreign substances from a molten metal surface in a steel sheet hot-dip galvanizing process according to another embodiment of the present invention. In the embodiment of the present invention, the same components as the embodiment refer to the same reference numerals.

Referring to the drawings, the device 10 for removing foreign substances from a molten metal surface in a steel sheet hot-dip galvanizing process includes the snorkel part 20 for preventing oxidation by surrounding the steel sheet 200 having an end that is immersed in the hot-dip galvanizing bath 150 and flows into the hot-dip galvanizing bath 150. Further, a tank part 92 is installed to be vertically movable inside the snorkel part 20 and has a steel sheet passage part 91 through which the steel sheet 200 passing through the snorkel part 20 may pass, and a plating solution inflow dam part 93 which protrudes from the steel sheet passage part 91, allows the hot-dip galvanizing solution flowing out to the upper side through the steel sheet passage part 91 to flow into the tank part 92, and thus generates flow in a direction away from the surface of the steel sheet 200 is formed at an edge of the steel sheet passage part 91 of the tank part 92.

The plating solution inflow dam part 93 may be continuously or intermittently formed inside the snorkel part or along a trajectory of the steel sheet passage part 91. For example, the plating solution inflow dam part 93 may be formed as a plurality of tube members. When the plating solution inflow dam part 93 is formed as the plurality of tube members, the number of tube members installed in portions of the dam formation part 32 may be changed according to the amount of the overflowing hot-dip galvanizing solution.

Also, the device for removing foreign substances from a molten metal surface in a steel sheet hot-dip galvanizing process further includes a tank elevation unit 100 that elevates the tank part 92 with respect to the snorkel part 20 and a molten zinc discharge unit 50 for discharging the hot-dip galvanizing solution in the tank part 92 toward the molten metal surface of the hot-dip galvanizing bath 150. The tank elevation unit 100 may simultaneously elevate the molten zinc discharge unit 50 and the tank part 92.

In the above embodiment, the tank part 92 having the plating solution inflow dam part 92 is not illustrated in the drawings, however, since the steel sheet passage part 91 is formed in a closed curve, the tank part 92 may have a structure divided into at least two members to surround the steel sheet 200 during installation. Further, the molten zinc discharge unit 50 may be installed in each of the divided tank parts 92 to independently discharge the hot-dip galvanizing solution toward the molten metal surface of the hot-dip galvanizing bath.

The tank elevation unit 100 may elevate the tank part 92 with respect to the snorkel part 20, adjust the height of the plating solution inflow dam part 93 installed therein, that is, the height with respect to the molten metal surface, and thus allow the hot-dip galvanizing solution raised through the steel sheet passage part 91 to smoothly flow into the plating solution inflow dam part 93. The tank elevation unit 100 includes a bracket 101 that is installed in the snorkel part 20 to be vertically movable along a guide rail 102 and is connected to the tank part 92 and an actuator 103 that is installed in the snorkel part 20 and includes a cylinder, a jack screw, or the like for elevating the bracket 101.

Further, the molten zinc discharge unit 50 has substantially the same structure as the above embodiment.

In more detail, the molten zinc discharge unit 50 may allow the molten zinc in the hot-dip galvanizing bath 150 to continuously flow through the steel sheet inlet 91 by discharging, toward the molten metal surface 1 of the hot-dip galvanizing bath 150, the hot-dip galvanizing solution that overflows from the plating solution inflow damper part 93 and flows into the tank part 92.

The molten zinc discharge unit 50 includes at least one discharge connection part 51 for discharging the hot-dip galvanizing solution flowing into the tank part 93. The discharge connection part 51 may be installed on the side surface of the tank part 92 to communicate with the tank part 92, but the present invention is not limited thereto, and the discharge connection part 51 may be connected to a lower surface of the tank part 92 to communicate with the tank part 92.

Further, the outlet side of the discharge connection part 51 is connected to the pumping unit 60 to discharge the molten zinc in an inlet tank part 92 toward the molten metal surface 1 of the hot-dip galvanizing bath 150. As described above, the pumping unit 60 includes the housing member 61 connected to the discharge connection part 51 installed in the inlet tank part 92 and having an open upper side and a sealed lower side, the bracket 101 installed on the upper side of the housing member 61, the driving unit 63 installed in the bracket 101, and the impeller 66 that is rotated by the driving unit, is installed at an end of the rotary shaft 65 inside the housing member 61, and discharges the molten zinc flowing into the housing member 61 toward the molten metal surface of the hot-dip galvanizing bath through the open part of the upper side of the housing.

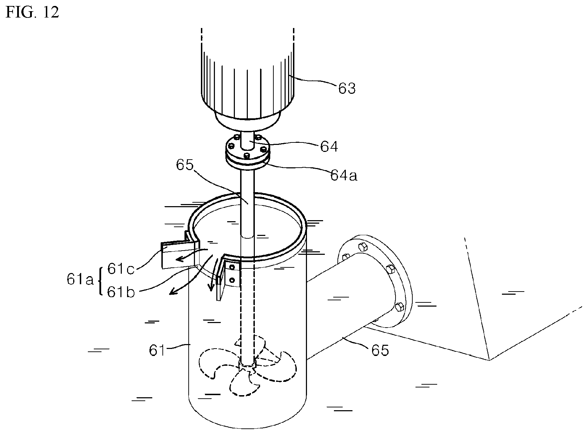

As illustrated in FIG. 12, a heat insulation member 64a for preventing heat of the rotary shaft 65 heated by the molten zinc from being transferred to the driving shaft 64 may be installed in a connection flange connecting the rotary shaft 65 of the impeller 66 and the driving shaft 64 of the driving unit 63.

Further, an upper end of the housing member 61 may be further provided with a guide part 61a so that the molten zinc pumped by the impeller 66 may be guided and discharged in one direction of the molten metal surface. The guide part 61a may have an opening 61b formed in the upper surface of the housing member 61, and guide blades 61b may be installed on two sides of the opening 61b.

Meanwhile, when the hot-dip galvanizing solution 2 pumped by the impeller installed in the housing member 61 is discharged toward the lower surface, the housing member 61 may further be provided with a molten zinc discharge tube (not illustrated) for discharging the hot-dip galvanizing solution 2 toward the molten metal surface of the hot-dip galvanizing bath 100. In this case, as described above, the upper surface side of the housing member 61 is not necessarily open.

An operation of the above-described device for removing foreign substances from a molten metal surface in a steel sheet hot-dip galvanizing process according to the present invention will be described below.

First, as illustrated in FIGS. 1 and 2, when a lower portion of the snorkel part 20 is partially immersed in the hot-dip galvanizing bath 10 so that an end of the snorkel part 20 is located at a position lower than the water level of the molten metal surface 1, the hot-dip galvanizing solution 2 in the hot-dip galvanizing bath 10 overflows the dam formation part 32 and is stored in the storage space 34 partitioned by the chamber formation part 33.

In this state, when the driving unit 63 of the pumping unit 60 is operated, the impeller 66 is rotated, and thus the hot-dip galvanizing solution is discharged toward the molten metal surface 1 of the hot-dip galvanizing bath 150 through the open upper end side of the housing body 61. Thus, the water level of the storage space 34 is lowered, and the hot-dip galvanizing solution continuously flows from the lower side to the upper side through the steel sheet inlet 31 and thus overflows the dam formation part 32.

In this process, the hot-dip galvanizing solution and foreign substances in the storage space 34 installed at an end of the snorkel part 20 are discharged toward the molten metal surface of the hot-dip galvanizing bath through the discharge connection part 51 and the housing member 61.

Thus, foreign substances, such as ash, having a relatively low specific gravity may be prevented from floating toward the molten metal surface of the hot-dip galvanizing bath 150, flowing into the hot-dip galvanizing solution, and thus recontaminating the hot-dip galvanizing solution 2 or re-flowing into the steel sheet inlet 31. Thus, a plating defect in which foreign substances are attached to the surface of the steel sheet 200 that is galvanized can be fundamentally prevented.

Further, in the device for removing foreign substances from a molten metal surface in a steel sheet hot-dip galvanizing process according to the present invention, the hot-dip galvanizing solution having a large specific gravity is discharged to an upper portion of the molten metal surface through an opening or the molten zinc discharge tube 68 of the housing member, a pumping load can be reduced, and further, a load of the driving motor 310 of the driving unit can be reduced.

Further, as illustrated in FIGS. 10 and 11, when the tank part 92 is elevated, the hot-dip galvanizing solution introduced through the steel sheet passage part 91 is introduced into the plating solution inflow damper part 93. As described above, this introduced hot-dip galvanizing solution is discharged toward the molten metal surface 1 of the hot-dip galvanizing bath, and thus foreign substances can be prevented from being mixed with the hot-dip galvanizing solution 2 in the hot-dip galvanizing bath 15 and, furthermore, can be prevented from adhering to the surface of the galvanized steel sheet 20.

The above-described device for removing foreign substances from a molten metal surface in a steel sheet hot-dip galvanizing process according to the present invention has been described with reference to the accompanying drawings, but this is merely illustrative, and those skilled in the art will understand that various modifications and equivalent other embodiments are possible therefrom.

Thus, the true scope of the technical protection of the present invention should be defined only by the technical spirit of the appended claims.

## Claims

1. A device for removing foreign substances from a molten metal surface in a steel sheet hot-dip galvanizing process, the device comprising:
a snout that includes a snorkel part, which has an end immersed in a molten metal surface of a hot-dip galvanizing bath to prevent oxidation by surrounding a steel sheet flowing into the hot-dip galvanizing bath, and a dam unit having a dam formation part that surrounds the steel sheet to be spaced apart from the end of the snorkel part by a predetermined interval and allows a hot-dip galvanizing solution in the hot-dip galvanizing bath to overflow to an inner peripheral surface of the snorkel part so as to prevent foreign substances falling onto the molten metal surface in the snorkel part from adhering to the steel sheet; and
a molten zinc discharge unit that is installed in the snorkel part and pumps the hot-dip galvanizing solution that overflows the dam formation part of the dam unit toward the molten metal surface in the hot-dip galvanizing bath outside the snorkel part so as to prevent foreign substances contained in the hot-dip galvanizing solution that overflows the dam formation part from being mixed into the hot-dip galvanizing solution in the hot-dip galvanizing bath to re-contaminate the hot-dip galvanizing solution or from flowing back into the snorkel part.

2. The device of claim 1, wherein the molten zinc discharge unit includes:
at least one discharge connection part installed in the snorkel part and connected to a storage space in which the hot-dip galvanizing solution that overflows the dam formation part of the dam unit is stored;
a housing member connected to the discharge connection part and having an open upper part and a sealed lower surface; and
a pumping unit that includes a support bracket installed on an upper side of the housing member, a driving unit installed in the support bracket, a rotary shaft connected to a driving shaft of the driving unit and extending into the housing, and an impeller that is installed in the rotary shaft and discharges the hot-dip galvanizing solution flowing into the housing through the discharge tube part toward the molten metal surface of the hot-dip galvanizing bath through the open part of the housing member.

3. The device of claim 2, wherein a molten zinc discharge hole for discharging the hot-dip galvanizing solution remaining inside the housing, the discharge tube part, and the snorkel part when the molten zinc discharge unit is repaired is formed in a lower surface of the housing.

4. The device of claim 1, wherein a gap between an open upper end of a housing and the driving unit for rotating the impeller is open to discharge the hot-dip galvanizing solution containing foreign substances.

5. The device of claim 2, wherein the driving unit, the rotary shaft rotated by the driving unit, and the impeller are installed to be vertically movable by an elevation unit installed in the support bracket.

6. The device of claim 2, further comprising an inert gas spray unit that is installed in the support bracket or the driving unit to prevent oxidation of the rotary shaft though the open part of the housing member, cool the rotary shaft, and prevent foreign substances from adhering to the rotary shaft.

7. The device of claim 2, further comprising a plating solution guide part that is provided in an open upper end side of the housing member to guide the hot-dip galvanizing solution discharged through an open side of the housing member so that the hot-dip galvanizing solution flows in a predetermined direction.

8. The device of claim 1, wherein the molten zinc discharge unit includes:
at least one discharge connection part that is installed in the snorkel part and discharges the hot-dip galvanizing solution that overflows the dam member from an inside of the snorkel part;
a housing member that is connected to the discharge connection part and has a sealed lower surface; and
a pumping unit that includes a support bracket installed on the upper side of the housing member, a driving unit installed in the support bracket, a rotary shaft connected to a driving shaft of the driving unit and extending into the housing member, and an impeller that is installed in the rotary shaft and pumps the hot-dip galvanizing solution flowing into the housing member through the discharge connection part, and
the molten zinc discharge unit further includes a molten zinc discharge part connected to the housing member to discharge the hot-dip galvanizing solution in the snorkel part toward a molten metal surface of the hot-dip galvanizing bath.

9. A device for removing foreign substances from a molten metal surface in a steel sheet hot-dip galvanizing process, the device comprising:
a snorkel part that has an end immersed in a molten metal surface of a hot-dip galvanizing bath to prevent oxidation by surrounding a steel sheet flowing into the hot-dip galvanizing bath;
a tank part that is installed to be vertically movable in the snorkel part and has a plating solution inflow damper part spaced apart from a steel sheet surrounded by the snorkel part by a predetermined interval and allowing the hot-dip galvanizing solution near the steel sheet to flow thereinto;
a molten zinc discharge unit that is installed in the tank part, pumps molten zinc flowing into the tank part toward the molten metal surface in the hot-dip galvanizing bath, and discharges the hot-dip galvanizing solution containing foreign substances in the tank part toward the molten metal surface in the hot-dip galvanizing bath so as to prevent foreign substances from flowing into the snorkel part; and
an elevation unit that is installed in the snorkel part and elevates the molten zinc discharge unit and the tank part.

10. The device of claim 9, wherein the molten zinc discharge unit includes:
at least one discharge connection part that is installed in the tank part to discharge the molten zinc flowing into the tank part;
a housing member that is connected to the discharge connection part and has an open upper part and a sealed lower surface; and
a pumping unit that includes a support bracket installed on the upper side of the housing member, a driving unit installed in the support bracket, a rotary shaft connected to a driving shaft of the driving unit and extending into the housing, and an impeller that is installed in the rotary shaft and discharges the hot-dip galvanizing solution flowing into the housing member through the discharge connection part toward the molten metal surface of the hot-dip galvanizing bath through the open part of the housing member.

11. The device of claim 10, wherein a molten zinc discharge hole for discharging molten zinc remaining inside the housing, the discharge tube part, and an inflow tank member when the molten zinc discharge unit is repaired is formed on a lower surface of the housing.
